# EUROPEAN PATENT APPLICATION

(11) **EP 1 063 634 A2**
(43) Date of publication of application: **27.12.2000**
(21) Application number: 00304196.9
(22) Date of filing: 18.05.2000
(51) Int. Cl.: G10L 15/06

(54) **System for recognizing utterances alternately spoken by plural speakers with an improved recognition accuracy**

(30) Priority: 21.06.1999 JP 17381899
(71) Applicant: MATSUSHITA ELECTRIC INDUSTRIAL CO., LTD., Kadoma-shi, Osaka 571-8501 (JP)
(72) Inventor: Kunieda, Nobuyuki, Yokohama-shi, Kanagawa-ken 224-0054 (JP)
(74) Representative: Dempster, Benjamin John Naftel

(57) **Abstract**

A system for recognizing a speech spoken by one of plurality of speakers. The system is provided with a parameter table. Each record of the parameter table containing acoustic features and at least one parameter associated with each of prospective speakers. A set of speech signals is obtained from the speech. If the speaker is included in the prospective speakers, the speech is recognized by using the parameter(s) associated with the speaker. If the speaker is not included in the prospective speakers, a record for the speaker is added to the parameter table by using acoustic features and at least one parameters obtained through an analysis of the set of speech signals. The parameter associated with the speaker is updated by using at least one parameters obtained through an analysis of the set of speech signals.

## Description

The invention relates to a speech recognition method and system and, more particularly, to such a system and method especially adapted for the recognition of speeches spoken by plural speakers.

Various techniques have been proposed so far to improve the recognition accuracy in speech recognition systems. On of such techniques is, for example, to select recognition parameters in response to a change in the voice quality, the speech speed, etc. Japanese unexamined patent publication No. 07056595 (1995) discloses "Voice Recognition Device". An input speech utterance is analyzed to determine the mode of utterance from three modes, i.e., "the utterance in syllables", "the utterance in words" and "the utterance in sentences", or to determine whether the speaker is male or female, or adult or child, or to determine. The determination result is used for controlling the matching between the input speech utterance and each of standard patterns and the determination of one or more candidate standard pattern to be output.

Japanese unexamined patent publication No. 05040497 (1993) discloses "Speaker Adapted Speech Recognition System". The system has a plurality of acoustic templates of speakers for managing correspondence between an acoustic feature of the speech and a content of the speech. The acoustic feature of the speech managed by the acoustic templates is converted according to a set parameter. When a speech input for learning is input, the parameter is learned such that the acoustic template feature is approximately coincidence with the acoustic feature of the corresponding speech input for learning. At least one of the acoustic template having acoustic features closest to those of the speech input. The acoustic features of the acoustic templates are converted by comparing the corresponding acoustic features of the speech input with the corresponding acoustic template features. An acoustic template for the unknown speaker is created by converting the acoustic features of the acoustic template selected for the unknown speaker.

However, the prior art speech recognition systems are not adapted for speech recognition when a plurality of speakers is speaking alternately to one another. Therefore, it is an object of the invention to provide a speech recognition method and system that achieve an improved recognition accuracy by utilizing recognition parameters dedicated to each of prospective or known speakers even when a plurality of speakers are alternately speaking.

According to an aspect of the invention, a method of recognizing a speech spoken by one (hereinafter, referred to as "the speaker") of a plurality of speakers in a speech recognition system is provided. The speech recognition system is preferably provided with a parameter table storing records for known speakers whose utterance has been recognized at least once, each of the records containing a speaker ID of a respective known speaker, acoustic features and a set of parameters for the respective known speaker. A set of signals is obtained from a speech. If the speaker is included in the known speakers, the speech is recognized by using the set of parameters associated with the speaker. If the speaker is not included in the known speakers, a record for the speaker is added to the parameter table by using acoustic features. The set of parameters associated with the speaker is updated by using parameters obtained through an analysis of the set of signals.

The recognition operation yields at least one candidate and corresponding score(s) indicative of likelihood of the at least one candidate. One of the candidates is selected as a recognition result. In the selection process, if a difference between the scores of the output candidates is not smaller than a predetermined value, a best-score candidate is selected from the candidates. The candidates are saved with a selected candidate marked for subsequent candidate selection. If the difference between the scores of the output candidates is smaller than a predetermined value, one of the candidates is selected taking the stored selected candidates into account.

The speaker is identified by comparing acoustic features of the speech with the acoustic features of each known speakers of the parameter table. The candidates are stored in association with the speaker or the speaker's ID. One of the candidates that is best related to one of those stored selected candidates that are associated with the speaker is selected.

If the speaker is identified for the first time, position information of the speaker is added to a speaker list. The incoming direction of the speech is detected. And, if the accuracy of the identifying the speaker is determined to be low, if an ID of the speaker is found in the speaker list, and if the position information of the speaker in the speaker list coincides with the incoming direction, then it is determined that the speaker is identified by the ID.

According to another aspect of the invention, a system for recognizing a speech spoken by one (hereinafter, referred to as "the speaker") of a plurality of speakers to provide a recognition result is provided. The system is incorporated in a voice-controllable device that operates in response to the recognition result. The system comprises a parameter table storing records for known speakers whose utterance has been recognized at least once so far. Each of the records contains a speaker ID of a respective known speaker, acoustic features and a set of parameters for the respective known speaker. The system further comprises means for obtaining a set of signals from the speech; a speech recognizer, responsive to a determination that the speaker is included in the known speakers, for recognizing the speech by using the set of parameters associated with the speaker; a speaker identifier, responsive to a determination that the speaker is not included in the known speakers, for adding a record for the speaker to the parameter table by using acoustic features; and a parameter manager for updating the set of parameters associated with the speaker by using parameters obtained through an analysis of the set of signals.

The above-mentioned speech recognition system can be used for various kinds of voice-controllable devices that operate in response to an utterance by a speaker who is a user.

The features and advantages of the present invention will be apparent from the following description of an exemplary embodiment of the invention and the accompanying drawings, in which:
FIG. 1 is a schematic block diagram showing an arrangement of a speech recognition system according to an illustrative embodiment of the invention;
FIG. 2 is a block diagram showing an exemplary arrangement of the beam former 30 of FIG. 1;
FIG. 3 is a block diagram showing exemplary structures of the speech recognizer 40, the parameter table 70 and the parameter manager 80 of FIG. 1;
FIG. 4 is a flowchart showing an operation executed under the control of the speaker identifier 60;
FIG. 5A shows an exemplary arrangement of the microphone array 10 and speakers;
FIG. 5B is a diagram showing an exemplary speaker list 62 maintained and used by the speaker identifier 60 in case of the exemplary arrangement of FIG. 5A;
FIG. 6A shows another exemplary arrangement of the microphone array 10 and speakers;
FIG. 6B is a diagram showing an exemplary speaker list 62a maintained and used by the speaker identifier 60 in case of the exemplary arrangement of FIG. 6A;
FIG. 7 is a flowchart showing an exemplary operation executed under the control of the candidate selector 50;
FIG. 8 is a diagram showing a part of an exemplary recognition history data maintained and used by the candidate selector 50;
FIG. 9 is a diagram showing a part of such a voice-controllable device;
FIG. 10 is a diagram showing another embodiment of the input portion of the speech recognition system of FIG. 1; and
FIG. 11 is diagram showing an example of a sample position-standard acoustic data table.

Throughout the drawing, the same elements when shown in more than one figure are designated by the same reference numerals.

There now follows a detailed description of the preferred embodiments.

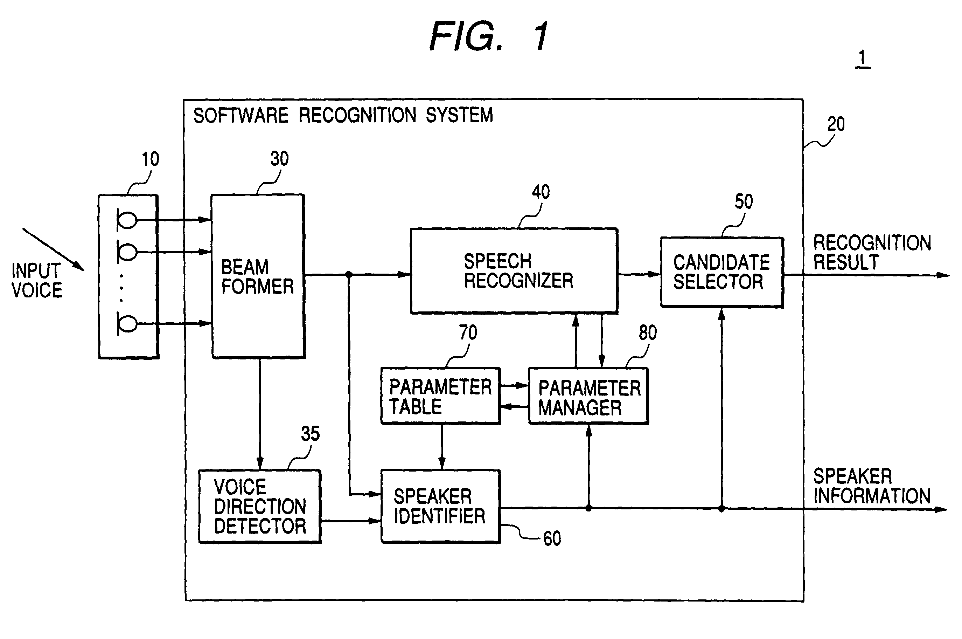

FIG. 1 is a schematic block diagram showing an arrangement of a speech recognition system according to an illustrative embodiment of the invention. In FIG. 1, the speech recognition system 1 comprises an array of microphones 10 and a recognition software system 20. The recognition software system 20 is actually a set of programs executed by a not-shown computer including a not-shown CPU. The not-shown computer further includes a not-shown ROM and/or a not-shown hard disc for storing the recognition software system 20.

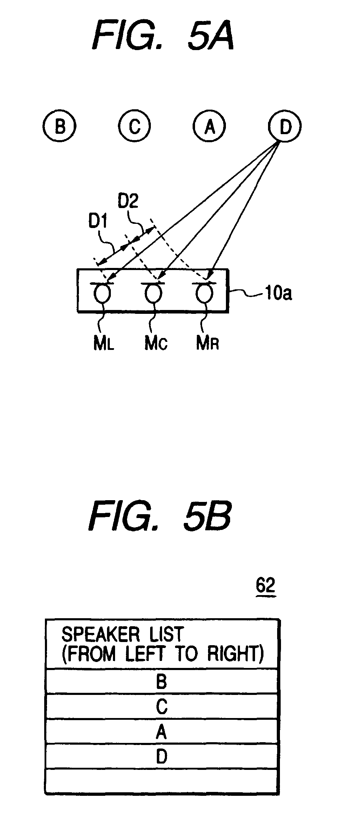

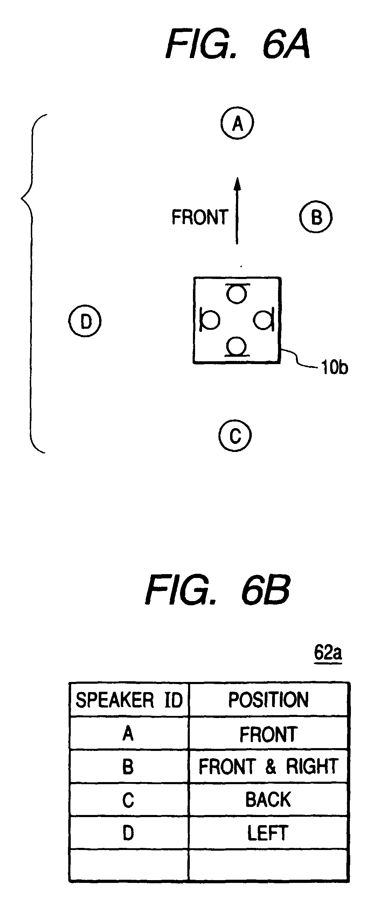

In the microphone array 10, the microphones may be arranged in a various ways depending on the purpose of the device incorporating the speech recognition system 1. FIGS. 5A and 6A show two exemplary arrangements of the microphone array 10. In these figures, encircled alphabets A, B, C and D indicate speakers. In FIG. 5A, a microphone array 10a has three microphones M_{L}, M_{C} and M_{R} arranged in a line. In FIG. 6A, a microphone array 10b has four microphones arranged in four directions perpendicular to adjacent ones.

The recognition software system 20 comprises a beam former 30 for forming an objective speech signal from speech signals from the microphones of the microphones array 10; a voice direction detector 35 for detecting or estimating the direction of an incoming voice by using one or more signals from the beam former 30; a speaker identifier 60 for identifying the speaker from the extracted speech signal if the speaker's data is stored in a parameter table 70 (described later); a parameter table 70 for storing, for each speaker whose utterances has been recognized so far, acoustic feature data and a set of parameters for use in speech recognition; a speech recognizer 40 for recognizing the speech signal from the beam former 30 to provide one or more output candidate and corresponding score(s) indicative of the likelihood of the candidate(s); a candidate selector 50 for selecting an appropriate one of the output candidates on the basis of the analysis of one or more preceding utterance by the speaker identified by the speaker identifier 60; identifier and a parameter manager 80 for selecting one of parameter sets associated with a speaker identified by the speaker identifier 60 and for updating a parameter in the parameter set having been selected with a preferable parameter if such preferable parameter is obtained through the speech recognition process.

It should be noted that providing the speech recognition system 1 with the microphone array 10, the beam former 30 and the voice direction detector 35 especially adapts the speech recognition system 1 for the recognition of utterances alternately spoken by a plurality of speakers. However, replacing the microphone array 10, the beam former 30 and the voice direction detector 35 by a single microphone still provides a speech recognition system that exhibits an improved recognition accuracy by analyzing one or more preceding utterance.

In a speech recognizing operation, an incoming voice from one of a plurality of speakers (say, A, B and C) are detected by the microphones of the microphone array 10. The voice signals detected by the array 10 microphones are supplied to the beam former 30. The beam former 30 forms an objective voice signal from the supplied voice signals which has been given by one of the speakers, say, the speaker A.

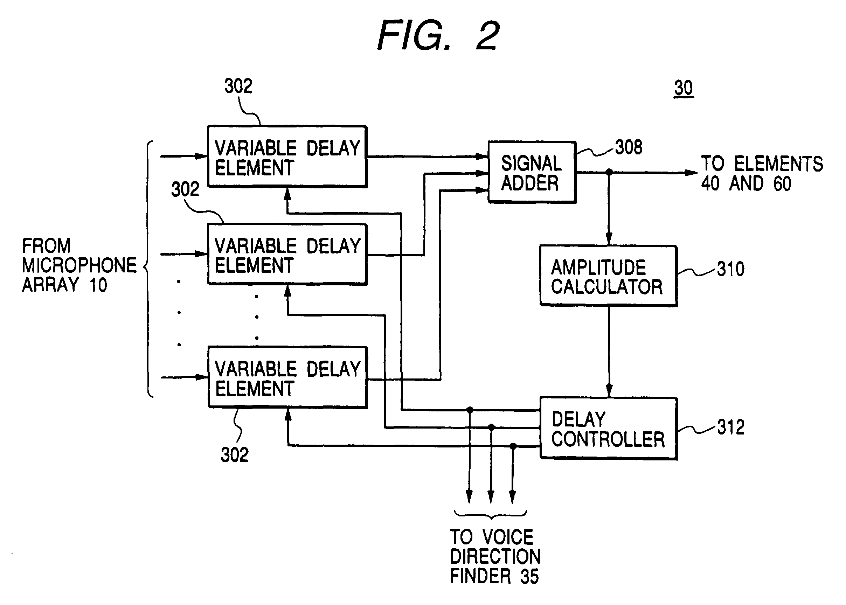

FIG. 2 is a block diagram showing an exemplary arrangement of the beam former 30 of FIG. 1. In FIG. 2, the beam former 30 comprises variable delay elements 302 connected with respective microphones of the array 10 for each delaying an input signal thereof according to a given delay control signal; a signal adder 308 for adding the output signals from the variable delay elements 302 to provide a mixed signal as an output of the beam former; an amplitude calculator 310 for calculating the amplitude of the mixed signal; and a delay controller 312 for supplying the variable delay elements 302 with respective above-mentioned delay control signals so as to cause the amplitude of the mixed signal to become maximum.

If the situation as shown in FIG. 5A is assumed and the speaker D is speaking, then, in order to make the mixed signal amplitude maximum, the delay controller 312 has to provide such delay control signals as cause the delay elements 302 to delay the speech signal from the microphone M_{C} for a time period D1 with respect to the signal from the microphone M_{L} and to delay the speech signal from the microphone M_{R} for a time period D2 with respect to the signal from the microphone M_{C}. The delay controller 312 may supply the delay control signals to the voice direction identifier 35 for voice incoming direction estimation. Alternatively, the delay controller 312 may supply one or more signal other than and base on the delay control signals.

The voice direction detector 35 detects or estimates the direction of an incoming voice on the basis of the signals supplied from the delay controller 312.

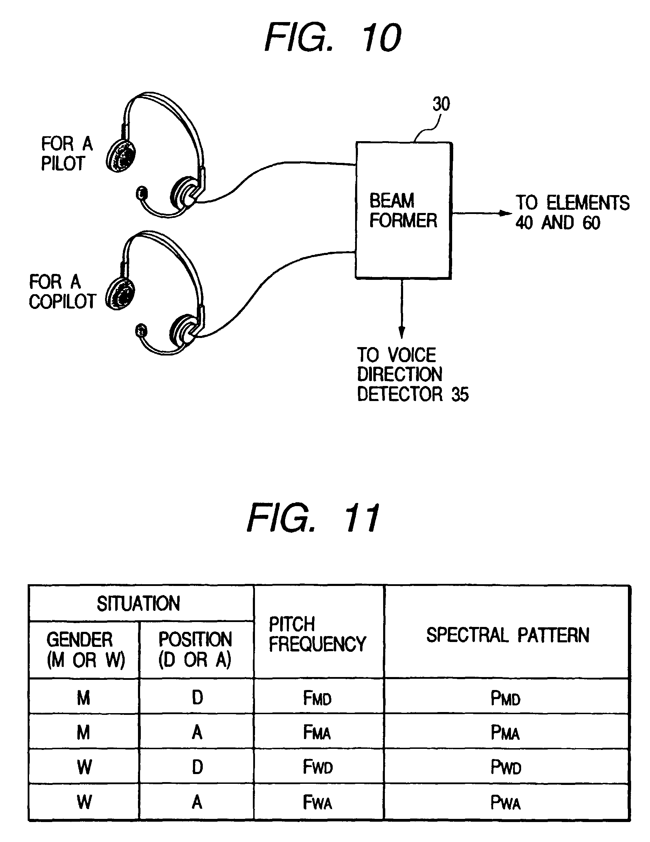

Using the speech signal from the bean former 30, The speaker identifier 60 determines if the speech signal is due to a speaker who has once uttered and, if so, which of the at least once uttered speakers the speaker is. Here, we discuss an example in which the possible situations of the speaker are classified by "gender" and "utterance circumstance" (or the position) into "a man at the driver's seat", "a man at the assistant driver's seat", "a woman at the driver's seat", and "a woman at the assistant driver's seat". For this purpose, average pitch frequencies F_{MD}, F_{MA}, F_{WD} and F_{WA} and average spectral patterns P_{MD}, P_{MA}, P_{WD} and P_{WA} are stored as standard spectral patterns in advance in association with the four situations, say, (M,D), (M,A), (W, D) and (W, A) as shown in FIG. 11.

The positions may be arranged in two dimensions, e.g., a front right seat (FR), a front left seat (FL), a back right seat (BR), a back middle seat (BM) and a back left seat (BL). In this case, (2+3)x2 average pitch frequencies and average spectral patterns are stored as standard acoustic patterns in advance in association with ten situations determined by combinations of the five positions and the two genders.

The speaker identifier 60 analyzes the pitch frequency and the spectral pattern of the speech signal from the beam former 30. Since the pitch frequency largely varies with the gender of speaker, the gender can be identified by the pitch frequency. The analysis of the average spectral pattern yields frequency characteristic of the utterance circumstances. Further, utilizing the output from the voice direction detection enhances the accuracy of speaker identification.

The sample position-standard spectral pattern table of FIG. 11 is preferably prepared prior to actual recognition operation. The above-mentioned speaker list such as 62 and 62a can be generated by using the sample position-standard spectral pattern table.

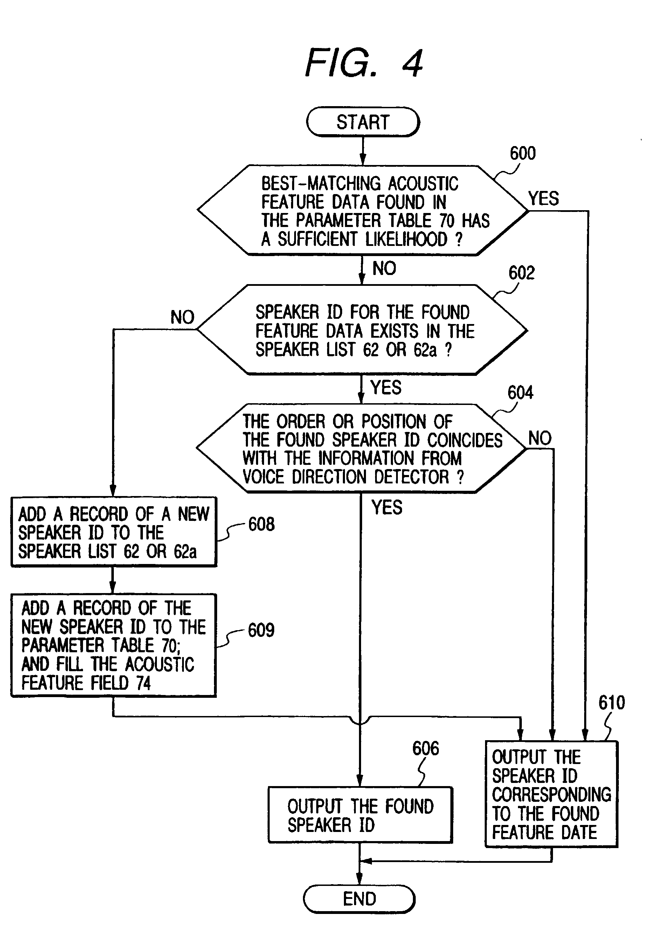

FIG. 4 is a flowchart showing an exemplary operation executed under the control of the speaker identifier 60. The speaker identifier 60 performs the operation of FIG. 4 each time of reception of a speech signal from the beam former 30. In step 600, the speaker identifier 60 searches the acoustic feature fields 74 of the parameter table 70 for the best matching acoustic feature data for the received speech signal, and makes a test to see if the best matching acoustic feature data has a likelihood equal to or more than a predetermined level. If so, the speaker identifier 60 outputs the speaker ID 72 corresponding to the found feature data in step 610 to end the operation.

If the test result is NO in step 600, then the speaker identifier 60 makes a test in step 602 to see if the speaker ID 72 for the found feature data is found in the speaker list 62 (or 62a) as shown in FIG. 5B (or FIG. 6B). The speaker list 62 contains the IDs of speakers (that have been collected from the beginning of the recognition operation) in the order of speaker's lining-up. The speaker list 62a contains the IDs of speakers and the positions of the speakers. The speaker list can take any suitable form. If the test result is YES in step 602, then the speaker identifier 60 makes another test in step 604 to see if the order or the position of the found speaker ID coincides with the information from the voice direction detector 35. If so, then the speaker identifier 60 outputs the found speaker ID in step 606 to end the operation and, otherwise, outputs the speaker ID corresponding to the found feature data in step 610 to end the operation. If the test result is NO in step 602, then the speaker identifier 60 adds a record of a new speaker ID to the speaker list 62 (or 62a) in step 608. Specifically, the speaker ID of the speaker is inserted in a appropriate position in the speaker list 62 according to the voice direction information from the detector 35. Alternatively, the speaker ID and the position are added to the speaker list 62a according to the voice direction information. Then, the speaker identifier 60 adds a record of the new speaker ID to the parameter table 70 and fills the acoustic feature field 74.

Thus, the speaker is identified with a higher accuracy, which enables the speech recognizer 40 to use more suitable parameters. The identified speaker ID is passed to the candidate selector 50 and the parameter manager 80 and may be also passed to the not-shown host system that utilizes the recognition results. identifier

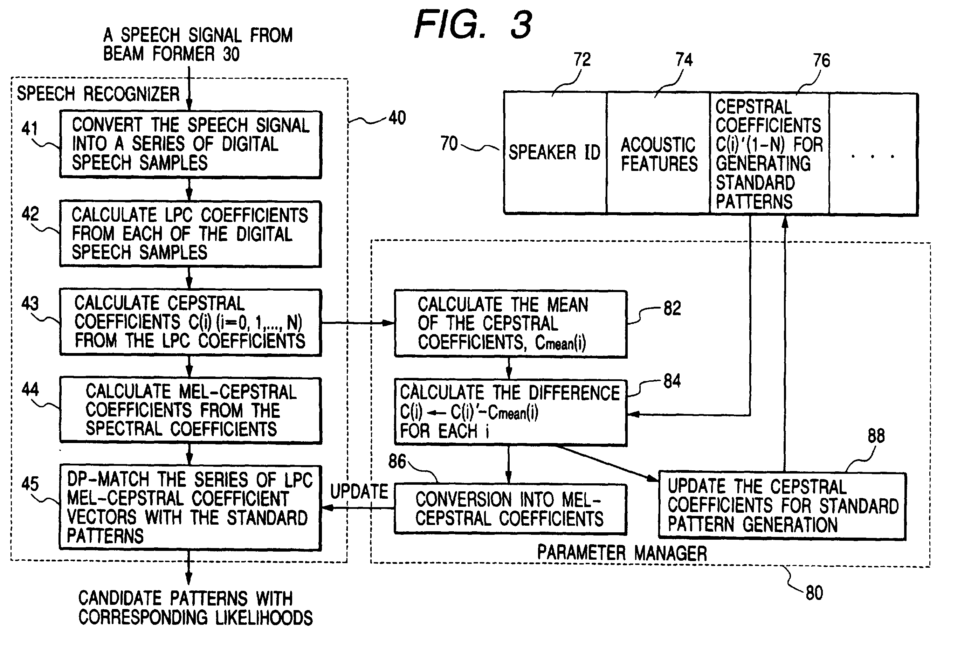

FIG. 3 is a block diagram showing exemplary structures of the speech recognizer 40, the parameter table 70 and the parameter manager 80 of FIG. 1. As shown in FIG. 3, each of the record of the parameter table 70 comprises a speaker ID field 72 containing a speaker ID; an acoustic feature field 74 containing acoustic feature data of the prospective (or known) speaker associated with the speaker ID; and a parameter field 76 containing a set of cepstral coefficients for generating standard patterns. The acoustic feature data in the fields 74 are used by the speaker identifier 60 for identifying the current speaker on the basis of the input speech or voice signal and the acoustic feature data.

In response to a reception of a speaker ID from the speaker identifier 60, the parameter manager 80 selects a set of cepstral coefficients 76 associated with the received speaker ID.

The speech recognizer 40 may be any appropriate conventional speech recognizer based on, for example, the DP (dynamic programming) matching or the hidden Markov model. The speech recognizer 40 includes a not-shown database for managing reference speech patterns for use in a matching with the input speech pattern.

A typical speech recognizer 40 will operate as shown in FIG. 3. That is, the recognizer 40 converts a speech signal from beam former 30 into a series of digital speech samples in step 41; calculates LPC (linear predictive coding) coefficients from each of the digital speech samples in step 42; calculates cepstral coefficients C(i) (i=0, 1,..., N) from the LPC coefficients in step 43; calculates mel-cepstral coefficients from the cepstral coefficients in step 44; and DP-matches each LPC mel-cepstral coefficient vector with the standard patterns and outputs one or more candidate pattern with corresponding likelihood scores in step 45.

During this recognition process, the parameter manager 80 (actually, a not-shown CPU) operates as follows. The CPU calculates the mean, Cₘₑₐₙ(i) for each kind i, of cepstral coefficients for a predetermined time period in step 82. In step 84, the subtraction of each mean Cₘₑₐₙ(i) from a corresponding cepstral coefficient C(i)' of the cepstral coefficient set 76 is calculated, enabling the correction of frequency characteristics due to the utterance circumstances of the current speaker. In step 86, the subtraction results or corrected cepstral coefficients are converted into mel-cepstral coefficients, which are to be used in the DP matching of step 45. On the other hand, step 88 updates the corresponding cepstral coefficient C(i)' on the basis of the subtraction result so as to optimize the standard patterns to the speaker identified by the speaker identifier 60.

In this way, the DP matching is achieved with the standard patterns kept optimum to the current speaker by updating, during the matching process, the parameters, i.e., the cepstral coefficients 76 for generating the standard patterns associated with the speaker ID 72 supplied from the speaker identifier 60. This enables high-accuracy speech recognition.

The speech recognizer 40 outputs one or more candidate pattern and corresponding likelihood score. In this specific example, two candidate patterns and corresponding likelihood scores are assumed.

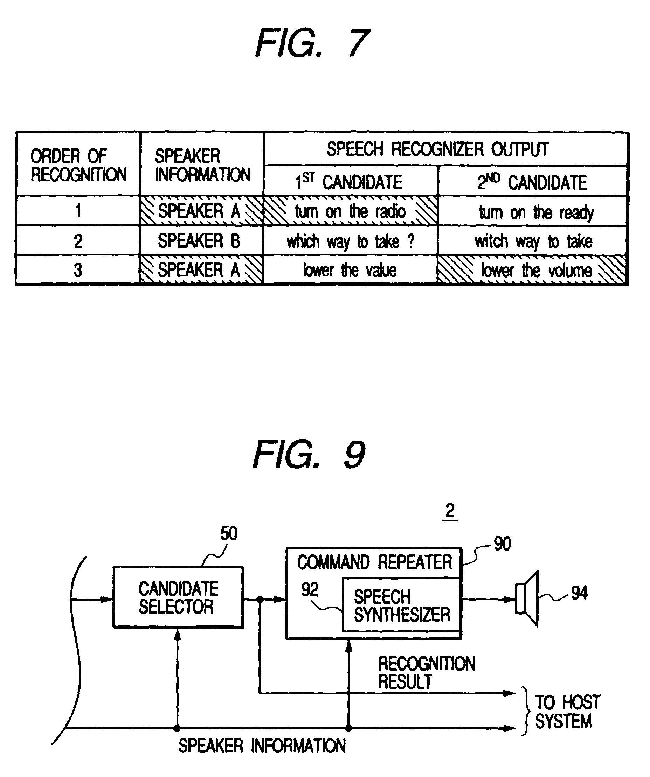

According to the principles of the invention, the candidate selector 50 maintains a predetermined number of candidate selection records in the order of recognition as shown in FIG. 7. In FIG. 7, each record comprises an order-of-recognition field, a speaker information field, and first and second candidate fields.

In order to facilitate the understanding of the invention, we assume a vehicle-mounted speech recognition system capable of controlling a navigation system, an audio system and an air conditioner in a vehicle. Then, if a person at the assistant driver's seat speaks "Turn on the radio" and "Lower the volume" without any utterance by other person, then it is possible to enhance the recognition accuracy by associating the word "volume" with the just preceding utterance "Turn on the radio". However, if the driver asks to the system "Which way to take?" to get information on the route, resulting in the order of utterances "Turn on the radio", "Which way to take?" and "Lower the volume", then it makes it difficult to associate the word "volume" with a preceding utterance "Turn on the radio" in prior art recognition systems. Even in such a situation, the inventive candidate selector 50 can enhance the recognition accuracy because the candidate selector 50 can achieve the association by searching a candidate selection record associated with the speaker of the utterance "Lower the volume". This is achieved by the following operation.

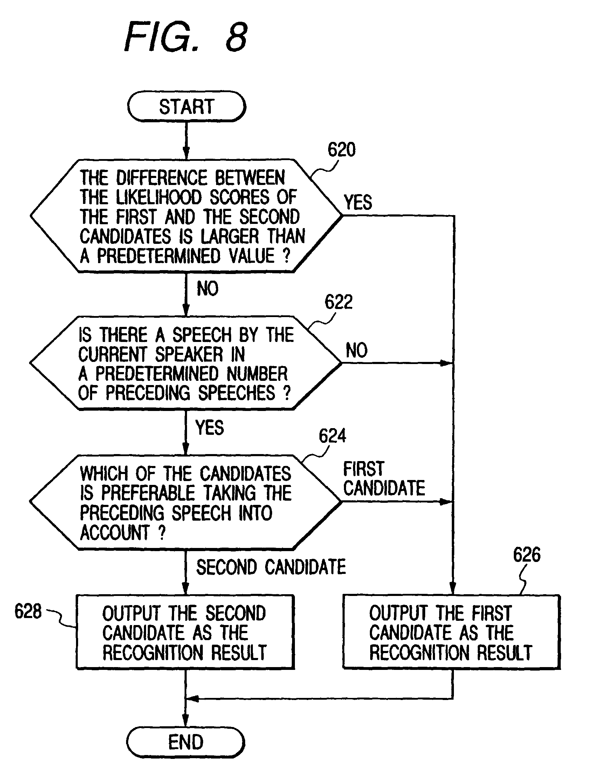

FIG. 8 is a flowchart showing an exemplary operation executed under the control of the candidate selector 50. In response to a reception, for each recognition unit, of output candidates and corresponding scores indicative of the likelihood of the candidates, the candidate selector 50 executes the operation of FIG. 8. In step 620, the candidate selector 50 first makes a test to see if the difference between the likelihood scores of the first and the second candidates is larger than a predetermined value. If so, meaning that the first candidate is determined to be a correct recognition result, then the candidate selector 50 outputs the first candidate as the recognition result.

Otherwise, which means that which of the candidates should be selected can not be determined only from the likelihood scores, then the candidate selector 50 makes a test, in step 622, to see if there is a speech by the current speaker within a predetermined number of preceding speeches. If so, then the candidate selector 50 makes another test, in step 624, to see if which of the candidates is preferable taking the preceding speech into account. In order to be able to make this decision, the candidate selector 50 keeps recognition history data in a not-shown RAM (random access memory) in a manner as shown in FIG. 7. In FIG. 7, it is assumed that the current candidates are "low are the volume" and "lower the volume" for an input speech spoken by a speaker A, and the difference between the likelihood scores of the current first and second candidates not larger than a predetermined value. In this case, since the speech spoken by a speaker A is found two recognition units before (step 622), the candidate selector 50 selects a preferable one of the first and second candidates is selected on the basis of the recognition result of the recognition two recognition units before, i.e., "turn on the radio" (step 624). Specifically, the second candidate "lower the volume" is selected and output as the recognition result because it is more suitable for the preceding speech "turn on the radio".

If the test result is YES in step 622, or if the first candidate is preferable, then the candidate selector 50 outputs the first candidate as the recognition result in step 626, and ends the operation. If the second candidate is preferable in step 624, then the candidate selector 50 outputs the second candidate as the recognition result in step 628, and ends the operation.

In this way, providing the speech recognition system 1 with the candidate selector 50 enables more precise speech recognition by means of speaker-based context analysis even in alternate utterances by a plurality of speakers. The speech recognition system 1 outputs a recognition result as well as speaker information or speaker ID, which is useful when used with the speaker list 62 or 62a.

### Applications

A speech recognition system according to the principles of the invention is applicable to a wide variety of devices and apparatuses.

For example, inventive speech recognition systems can be used for various devices and apparatuses that permit the user to give a command in voice instead of operating controllers.

FIG. 9 is a diagram showing a part of such a voice-controllable device. In FIG. 9, the left portion bounded by a vertical waved line is omitted. because the omitted portion is identical to the corresponding portion of the speech recognition system 1 of FIG. 1. In addition to the speech recognition system 1, the device 2 further comprises a command repeater 90 for automatically repeating a command before executing the command when the command is given by the user; and a loud speaker 94. The command repeater 2 includes a speech synthesizer 92 which repeats a given command in a voice similar to the speaker that has given the command by using the parameter(s) associated with the speaker. The recognition result as well as speaker information is given to the host system.

As described above, we made it a main object of the invention to enhance the accuracy in speech recognition by providing the speech recognition system 1 with the speaker finder 60, a parameter table 70 containing a parameter set for each speaker, the parameter manager 80 for optimizing the parameter set, and the candidate selector 50 for effecting speaker-based context analysis. However, we have discovered that the ability to provide the speaker ID makes the speech recognition system 1 especially advantageous to some applications as will be suggested in the following.

The speech recognition system 1 enables the host device or apparatus to operate in different manners depending on the speaker who has given a command or an utterance.

For example, a voice-controllable flight system incorporating an inventive speech recognition system can be so arranged as to follow a command by the pilot if contradictory commands were successively issued by both the pilot and the copilot. In this application, the microphones of two head sets which each are dedicated to a pilot and a copilot are used instead of a microphone array 10 as shown in FIG. 10.

The speech recognition system 1 is applicable to a system for automatically taking minutes of the proceedings. In this case, the taken minutes can be easily classified by the speakers.

The speech recognition system 1 is applicable to various kinds of robots. It is possible to provide a robot that give such utterances as establish a conversation with a specific person even when the robot is spoken to by a plurality of persons. Also, it is also possible to provide a pet robot that stores a table for associating a plurality of persons such the family members with respective ordered levels of intimacy and shows a respective level of intimacy to each member.

Many widely different embodiments of the present invention may be constructed without departing from the spirit and scope of the present invention. It should be understood that the present invention is not limited to the specific embodiments described in the specification, except as defined in the appended claims.

## Claims

1. A method of recognizing a speech spoken by one (hereinafter, referred to as "said speaker") of a plurality of speakers in a speech recognition system provided with a parameter table storing records for known speakers whose utterance has been recognized at least once, each of the records containing a speaker ID of a respective known speaker, acoustic features and a set of parameters for the respective known speaker, the method comprising the steps of:
obtaining a set of signals from said speech;
if said speaker is included in said known speakers, recognizing said speech by using said set of parameters associated with said speaker;
if said speaker is not included in said known speakers, adding a record for said speaker to said parameter table by using acoustic features ; and
updating said set of parameters associated with said speaker by using parameters obtained through an analysis of said set of signals.

2. A method as defined in claim 1, wherein said recognizing step outputs at least one candidate and corresponding score(s) indicative of likelihood of said at least one candidate, and wherein the method further comprises the step of selecting one of said at least one candidate as a recognition result, said selecting step comprising the steps of:
if a difference between said scores of said output candidates is not smaller than a predetermined value, selecting a best-score candidate from said at least one candidates;
storing said at least one candidates with a selected candidate marked; and
if the difference between said scores of said output candidates is smaller than a predetermined value, selecting said one of said at least one candidate taking said stored selected candidates into account.

3. A method as defined in claim 2, further comprising the step of identifying said speaker by comparing acoustic features of said speech with said acoustic features of each known speakers of said parameter table, wherein said step of storing said at least one candidates also stores said at least one candidates in association with said speaker and wherein said step of selecting said one of said at least one candidate selects one of said at least one candidates that is best related to one of those stored selected candidates that are associated with said speaker.

4. A method as defined in claim 3, further comprising the steps of:
if said speaker is identified for the first time, adding position information of said speaker to a speaker list;
detecting the incoming direction of said speech, and
if the accuracy of said identifying said speaker is determined to be low, if an ID of said speaker is found in said speaker list, and if said position information of said speaker in said speaker list coincides with said incoming direction, determining that said speaker is identified by said ID.

5. A method as defined in claim 1, wherein said obtaining step includes the steps of:
using an array of microphones, which provide respective speech signals, and
forming said speech signal from said respective speech signals such that an amplitude of said speech signal becomes maximum.

6. A method as defined in claim 4, wherein said obtaining step includes the steps of:
using an array of microphones, which provide respective speech signals, and
forming said speech signal from said respective speech signals such that an amplitude of said speech signal becomes maximum, and
wherein said step of detecting the incoming direction utilizes information from said step of forming said speech signal.

7. A system for recognizing a speech spoken by one (hereinafter, referred to as "said speaker") of a plurality of speakers to provide a recognition result wherein the system is incorporated in a voice-controllable device that operates in response to the recognition result, the system comprising:
a parameter table storing records for known speakers whose utterance has been recognized at least once so far, each of said records containing a speaker ID of a respective known speaker, acoustic features and a set of parameters for said respective known speaker,
means for obtaining a set of signals from said speech;
means, responsive to a determination that said speaker is included in said known speakers, for recognizing said speech by using said set of parameters associated with said speaker;
means, responsive to a determination that said speaker is not included in said known speakers, for adding a record for said speaker to said parameter table by using acoustic features; and
means for updating said set of parameters associated with said speaker by using parameters obtained through an analysis of said set of signals.

8. A system as defined in claim 7, wherein said recognizing means outputs at least one candidate and corresponding score(s) indicative of likelihood of said at least one candidate, and wherein the system further comprises means for selecting one of said at least one candidate as a recognition result, said selecting means comprising:
means, responsive to a determination that a difference between said scores of said output candidates is not smaller than a predetermined value, for selecting a best-score candidate from said at least one candidates;
means for storing said at least one candidates with a selected candidate marked; and
means, responsive to a determination that the difference between said scores of said output candidates is smaller than a predetermined value, for selecting said one of said at least one candidate taking said stored selected candidates into account.

9. A system as defined in claim 8, further comprising means for identifying said speaker by comparing acoustic features of said speech with said acoustic features of each known speakers of said parameter table, wherein said means for storing said at least one candidates also stores said at least one candidates in association with said speaker and wherein said means for selecting said one of said at least one candidate selects one of said at least one candidates that is best related to one of those stored selected candidates that are associated with said speaker.

10. A system as defined in claim 9, further comprising:
means, responsive to a determination that said speaker is identified for the first time, for adding position information of said speaker to a speaker list;
means for detecting the incoming direction of said speech, and
means, responsive to determinations that the accuracy of said identifying said speaker is determined to be low, that an ID of said speaker is found in said speaker list, and that said position information of said speaker in said speaker list coincides with said incoming direction, for determining that said speaker is identified by said ID.

11. A system as defined in claim 7, wherein said obtaining means includes:
means for using an array of microphones, which provide respective speech signals, and
means for forming said speech signal from said respective speech signals such that an amplitude of said speech signal becomes maximum.

12. A system as defined in claim 10, wherein said obtaining means includes:
means for using an array of microphones, which provide respective speech signals, and
means for forming said speech signal from said respective speech signals such that an amplitude of said speech signal becomes maximum, and
wherein said means for detecting the incoming direction utilizes information from said means for forming said speech signal.

13. A system as defined in claim 9, further comprising means for passing a speaker ID of said speaker to the voice-controllable device so as to enable the device to operate in a different manner depending on said speaker.

14. A voice-controllable device which operates in response to an utterance by a speaker who is a user, the device being provided with a system for recognizing an utterance spoken by one (hereinafter, referred to as "said speaker") of a plurality of speakers to provide a recognition result, the system comprising:
a parameter table storing records for known speakers whose utterance has been recognized at least once so far, each of said records containing a speaker ID of a respective known speaker, acoustic features and a set of parameters for said respective known speaker,
means for obtaining a set of signals from said utterance;
means, responsive to a determination that said speaker is included in said known speakers, for recognizing said utterance by using said set of parameters associated with said speaker;
means, responsive to a determination that said speaker is not included in said known speakers, for adding a record for said speaker to said parameter table by using acoustic features; and
means for updating said set of parameters associated with said speaker by using parameters obtained through an analysis of said set of signals.

15. A voice-controllable device as defined in claim 14, wherein said recognizing means outputs at least one candidate and corresponding score(s) indicative of likelihood of said at least one candidate, and wherein the system further comprises means for selecting one of said at least one candidate as a recognition result, said selecting means comprising:
means, responsive to a determination that a difference between said scores of said output candidates is not smaller than a predetermined value, for selecting a best-score candidate from said at least one candidates;
means for storing said at least one candidates with a selected candidate marked; and
means, responsive to a determination that the difference between said scores of said output candidates is smaller than a predetermined value, for selecting said one of said at least one candidate taking said stored selected candidates into account.

16. A voice-controllable device as defined in claim 15, further comprising means for identifying said speaker by comparing acoustic features of said utterance with said acoustic features of each known speakers of said parameter table, wherein said means for storing said at least one candidates also stores said at least one candidates in association with said speaker and wherein said means for selecting said one of said at least one candidate selects one of said at least one candidates that is best related to one of those stored selected candidates that are associated with said speaker.

17. A voice-controllable device as defined in claim 16, further comprising:
means, responsive to a determination that said speaker is identified for the first time, for adding position information of said speaker to a speaker list;
means for detecting the incoming direction of said utterance, and
means, responsive to determinations that the accuracy of said identifying said speaker is determined to be low, that an ID of said speaker is found in said speaker list, and that said position information of said speaker in said speaker list coincides with said incoming direction, for determining that said speaker is identified by said ID.

18. A voice-controllable device as defined in claim 14, wherein said obtaining means includes:
means for using an array of microphones, which provide respective voice signals, and
means for forming said utterance signal from said respective voice signals such that an amplitude of said utterance signal becomes maximum.

19. A voice-controllable device as defined in claim 17, wherein said obtaining means includes:
means for using an array of microphones, which provide respective voice signals, and
means for forming said utterance signal from said respective voice signals such that an amplitude of said utterance signal becomes maximum, and
wherein said means for detecting the incoming direction utilizes information from said means for forming said utterance signal.

20. A voice-controllable device as defined in claim 14, further comprising means, operative when a command is given by the user, for automatically repeating said command before executing said command.

21. A voice-controllable device as defined in claim 14, wherein the voice-controllable device automatically takes minutes of the proceedings, classifying the taken minutes by the speakers

22. A voice-controllable device as defined in claim 14, wherein the voice-controllable device is a pet robot that stores a table for associating a plurality of persons with respective ordered levels of intimacy and shows a respective level of intimacy to each person.
